# EUROPÄISCHE PATENTSCHRIFT

(11) **EP 2 414 990 B1**
(45) Veröffentlichungstag und Bekanntmachung des Hinweises auf die Patenterteilung: **07.11.2018**
(21) Anmeldenummer: 10719897.0
(22) Anmeldetag: 18.03.2010
(51) Int. Cl.: G06K 9/00, G05D 1/02, G06K 9/46, G06T 7/00

(54) **VERFAHREN UND VORRICHTUNG ZUR FAHRSPURERKENNUNG**
METHOD AND APPARATUS FOR LANE RECOGNITION
PROCÉDÉ ET DISPOSITIF POUR IDENTIFICATION DE VOIE DE CIRCULATION

(30) Priorität: 30.03.2009 DE 102009003697
(43) Veröffentlichungstag der Anmeldung: 08.02.2012
(73) Patentinhaber: Conti Temic Microelectronic GmbH, 90411 Nürnberg (DE)
(72) Erfinder: KLEIN, Wladimir, 88131 Lindau (DE); WALTER, Michael, 9435 Heerbrugg (CH)
(86) Internationale Anmeldenummer: PCT/DE2010/000303
(87) Internationale Veröffentlichungsnummer: WO 2010/111993

(56) Entgegenhaltungen:
- EP-A1- 1 873 716
- WO-A2-2008/089965
- DE-A1-102005 044 981
- DE-T2- 60 101 775
- MASAYOSHI KAMIJO ET AL: "LANE INDICATION/RECOGNITION SYSTEM BY USING IMAGE SENSORS: EVALUATION OF INDICATION PERFORMANCE OF LANE MARKS IN THE REAL WORLD" TRB ANNUAL MEETING CD-ROM,, [Online] 1. Januar 2003 (2003-01-01), Seite 17PP, XP007908710 Gefunden im Internet: URL:http://www.ltrc.lsu.edu/TRB_82/TRB2003 -001515.pdf> [gefunden am 2009-06-03]

## Beschreibung

Die Erfindung betrifft ein Verfahren und eine Vorrichtung zur Fahrspurerkennung gemäß Anspruch 1 bzw. 7.

Zunehmend werden in Fahrzeugen Fahrerassistenzsysteme eingesetzt, die den Fahrer bei der Spurhaltung des Fahrzeugs unterstützen. Assistenzsysteme, die den Fahrer beim unbeabsichtigten Verlassen der Fahrzeugspur warnen, werden im Englischen als Lane-Departure Warning Systems (LDWS) bezeichnet. Systeme, welche direkt in die Lenkung eingreifen können, werden im Englischen als Lane Keeping Systems (LKS) bezeichnet. Im Deutschen werden diese Systeme allgemein als Spurhalteassistenzsysteme bezeichnet.

Spurhalteassistenzsystem sind in der Regel in der Lage, die Fahrspur vor einem Fahrzeug zu erkennen (sog. Fahrspurerkennung), also insbesondere den Straßenverlauf. Insbesondere werden von den Spurhalteassistenzsystemen die Spurbreite, die horizontale und/oder vertikale Straßenkrümmung, die Ablage zur Spurmitte sowie die Nick- und Gierwinkel des Fahrzeugs geschätzt. Aus diesen Systemgrößen kann die Zeit bis zum Verlassen der Fahrspur berechnet werden, und der Fahrer vor einem ungewollten Verlassen der Fahrspur gewarnt bzw. das Fahrzeug mit Hilfe einer elektrischen Lenkung oder eines gezielten ESP (Elektronisches Stabilitäts-Programm)-Eingriffs in der Spur gehalten werden.

Die vorgenannten Systemgrößen können insbesondere durch eine digitale Bildverarbeitung der mit einem optischen Sensor, beispielsweise einer CMOS-Kamera, erfassten Lage vor einem Fahrzeug ermittelt werden. Hierzu wird eine spezielle Bildverarbeitungsalgorithmik eingesetzt, die Strukturen in den erfassten Bildern auswertet, die für eine Fahrzeugspur und deren Verlauf charakteristisch sind, beispielsweise Fahrbahnmarkierungen oder Berandungen einer Fahrbahn wie Leitplanken und dergleichen. Die korrekte Funktion eines auf einer derartigen Bildverarbeitung basierenden Spurhalteassistenzsystems hängt vor allem davon ab, dass in den erfassten digitalen Bildern die für die Fahrspurerkennung wesentlichen Strukturen zuverlässig und exakt erkannt werden. Die eingesetzte Bildverarbeitungsalgorithmik erkennt Markierungen vor allem aufgrund der Dunkel-Hell/Hell-Dunkel-Übergange zwischen der Strasse und Fahrbahnmarkierungen. Weiterhin wird in den Bildern nach Strukturen mit dem höchsten Kontrast gesucht, da diese meistens durch die erwähnten Übergänge erzeugt werden. Treten in den Bildern allerdings Strukturen mit einem hohen Kontrast auf, die nicht durch Fahrbahnmarkierungen erzeugt werden, kann dies dazu führen, dass die Bildverarbeitungsalgorithmik entweder eine Fahrspur nicht korrekt erkennt, oder überhaupt nicht in der Lage ist, eine Fahrspur zu erkennen.

Die EP 1320072 A2 zeigt ein Verfahren zur Erkennung von Fahrbahnmarkierungen, bei dem aus einem Bild Kanten mit dem zugehörigen Winkel extrahiert werden. Weiter werden die Kanten extrahiert, die zu einem Fluchtpunkt ausgerichtet sind. Aus diesen Kanten werden Fahrbahnmarkierungen bestimmt.

WO 2008/089965 A2 zeigt ein Verfahren und System zur Erkennung von Reflexionen in Videobildern einer Straße. In einer Region of Interest, in der Fahrspurmarkierungen im Bild üblicherweise gefunden werden können, werden Kanten spaltenweise bestimmt. Kanten mit hohem Kontrast, die em Wesentlichen einen vertikalen Verlauf aufweisen, werden als Reflexionen identifiziert und für die Erkennung der Fahrspurmarkierungen nicht weiter berücksichtigt.

Aufgabe der vorliegenden Erfindung ist es daher, ein Verfahren und eine Vorrichtung zur Fahrspurerkennung vorzuschlagen, die eine gegenüber der eingangs geschilderten Bildverarbeitungsalgorithmik verbesserte Fahrspurerkennung ermöglichen.

Diese Aufgabe wird durch ein Verfahren zur Fahrspurerkennung mit den Merkmalen nach Anspruch 1 und eine entsprechende Vorrichtung mit den Merkmalen nach Anspruch 7 gelöst. Weitere Ausgestaltungen der Erfindung ergeben sich aus den abhängigen Ansprüchen.

Ein wesentlicher Gedanke der Erfindung besteht nun darin, die Fahrspurerkennung dadurch zu verbessern, dass Reflexionen auf einer Fahrbahn identifiziert werden, die sich häufig von den für die Fahrspurerkennung wesentlichen Strukturen kaum unterscheiden, und meistens auf insbesondere nassen Fahrbahnen durch die Scheinwerfer und Rücklichter vorausfahrender Fahrzeuge erzeugt werden. Solche Reflexionen weisen ähnlich wie Fahrbahnmarkierungen charakteristische Hell-/DunkelÜbergänge auf und besitzen zudem häufig eine ähnliche Breite wie Fahrbahnmarkierungen. Daher besteht die Gefahr, dass diese Reflexionen von herkömmlichen Spurhalteassistenzsystemen fälschlicherweise als für die Fahrspurerkennung relevante Markierungen klassifiziert werden, was die Funktionsweise der Spurhalteassistenzsysteme wie eingangs erläutert wesentlich beeinträchtigen kann. Darauf aufbauend werden nun nach einem Grundgedanken der Erfindung Reflexionen erkannt, indem unter den in einem Bild enthaltenen und für die Fahrspurerkennung charakteristischen Markierungen genau die Markierungen identifiziert werden, die eine von der Orientierung typischer Fahrspurmarkierungen deutlich abweichende Orientierung im digitalisierten Bild wie beispielsweise einen nahezu senkrechten Verlauf besitzen, da diese Markierungen mit hoher Wahrscheinlichkeit durch Reflexionen von Scheinwerfern auf einer insbesondere nassen Fahrbahn verursacht wurden. Derart identifizierte Markierungen können dann von den anderen Markierungen im Bild separiert und für eine Fahrspurerkennung verworfen werden. Dadurch kann die Fahrspurerkennung insbesondere bei nassen Fahrbahnen verbessert werden.

Die Erfindung betrifft nun gemäß einer Ausführungsform ein Verfahren zur Fahrspurerkennung, bei dem ein digitalisiertes Bild einer Fahrspur ausgewertet wird, mit den folgenden Schritten:
- Erkennen von Kanten in dem Bild,
- Ermitteln der Winkel der erkannten Kanten in Bezug auf eine Referenzkante,
- Entfernen der Kanten aus der Menge der erkannten Kanten, deren Winkel innerhalb eines vorgegebenen Winkelbereichs liegt, und
- Erkennen der Fahrspur auf Basis der übrigen Kanten aus der Menge der erkannten Kanten.

Die Ermittlung des Winkels jeder Kante erlaubt eine Klassifizierung von Kanten und dadurch die Verbesserung der Fahrspurerkennung, da die für die Erkennung ungeeigneten Kanten entfernt werden können. Durch das Ermitteln der Winkel von erkannten Kanten können vor allem die Kanten ermittelt werden, die in Bezug auf den Horizont im Bild eine nahezu senkrechte Orientierung besitzen und daher basierend auf dem oben erläuterten Grundgedanken höchstwahrscheinlich von Reflexionen von Scheinwerfern anderer Fahrzeuge auf einer insbesondere nassen Fahrbahn erzeugt wurden.

Um insbesondere die von Reflexionen von Scheinwerfern anderer Fahrzeuge auf einer insbesondere nassen Fahrbahn erzeugten und überwiegend nahezu senkrechten Kanten zuverlässig detektierten zu können, kann die Referenzkante eine senkrechte Kante im Bild sein, die um einen vorgegebenen Rollwinkel eines Fahrzeugs gedreht ist. Der Rollwinkel kann beispielsweise durch einen entsprechenden Sensor erfasst und für die algorithmische Drehung der an sich senkrechten Referenzkante berücksichtigt werden.

Der vorgegebene Winkelbereich kann insbesondere derart konfiguriert sein, dass er alle Kanten umfasst, deren Orientierung etwa der Orientierung der Referenzkante entspricht. Vor allem kann der Winkelbereich so gewählt sein, dass auch Kanten als zu entfernende Kanten klassifiziert werden, deren Orientierung im Bild nicht genau mit der Orientierung der Referenzkante übereinstimmt, sondern in Bezug auf die Orientierung der Referenzkante verkippt ist, aber nicht derart verkippt, dass sie beispielsweise die Randmarkierungen oder Leitplanken der Fahrspur sein könnten.

Das Erkennen von Kanten kann vor allem ein horizontales und anschließend ein vertikales Kantenfiltern eines Bereichs des Bildes aufweisen, um Paare von jeweils zu einer Kante gehörigen horizontalen und vertikalen Kantenkomponenten zu bestimmen, und das Ermitteln der Winkel der erkannten Kanten kann das Berechnen des Arcustangens des Quotienten der horizontalen und vertikalen Kantenkomponente jedes Kantenpaares im Bereich des Bildes aufweisen. Durch das horizontale und vertikale Kantenfiltern können die horizontalen bzw. vertikalen Komponenten von Kanten im Bild bestimmt werden, aus denen wiederum über den Arcustanges der Winkel zwischen jeder Kante und dem Bildhorizont berechnet werden kann. Eine solche Vorgehensweise führt zu relativ genauen Ergebnissen der Kantenwinkel.

Das Verfahren kann ferner derart ausgebildet sein, dass in einem Detektionsmodus einer automatischen Fahrspurerkennung das Entfernen von Kanten nur dann erfolgt, wenn sich ein die automatische Fahrspurerkennung einsetzendes Fahrzeug innerhalb der Fahrspur befindet. Hierbei wird davon ausgegangen, dass es nur dann sinnvoll ist, eine Kantenentfernung durchzuführen, wenn sich as Fahrzeug innerhalb der Fahrspur befindet, da eine Fahrbahnmarkierung, beispielsweise der Mittelstreifen einer mehrspurigen Fahrbahn, in der Regel nur dann senkrecht im Bild erscheint, wenn sich das Fahrzeug etwa mittig auf der Fahrbahnmarkierung befindet. Mit anderen Worten können also nahezu senkrechte Kanten im Bild für die Fahrspurerkennung entfernt werden, wenn sich das Fahrzeug in der Fahrspur befindet, da mit sehr hoher Wahrscheinlichkeit dann davon ausgegangen werden kann, dass nahezu senkrechte Kanten im Bild aus Reflexionen resultieren und eine Anwendung der Kantenentfernung gemäß der Erfindung Sinn macht.

Wird eine automatische Fahrspurerkennung in einem Trackingmodus betrieben, lässt sich eine zu erwartende Kantenrichtung aus der Prädiktion bestimmen. Daher kann im Trackingmodus vorgesehen sein, dass das Entfernen einer Kante nur dann erfolgen soll, wenn die Differenz zwischen dem Winkel der Kante, deren Winkel innerhalb des vorgegebenen Winkelbereichs liegt, und einer prädizierten Orientierung eine vorgegebenen Schwelle überschreitet.

Weiterhin können bei einem histogrammbasierten Trackingmodus die Bereiche von der Kantenentfernung ausmaskiert werden, in denen sich Kanten befinden, bei denen die Differenz zwischen dem Winkel der Kante, deren Winkel innerhalb des vorgegebenen Winkelbereichs liegt, und der prädizierten Orientierung die vorgegebenen Schwelle überschreitet.

Eine weitere Ausführungsform der Erfindung betrifft eine Vorrichtung zur Fahrspurerkennung, die zur Auswertung eines digitalisierten Bildes einer Fahrspur derart konfiguriert ist, dass sie die folgenden Schritte ausführt:
- Erkennen von Kanten in dem Bild,
- Ermitteln der Winkel der erkannten Kanten in Bezug auf eine Referenzkante,
- Entfernen der Kanten aus der Menge der erkannten Kanten, deren Winkel innerhalb eines vorgegebenen Winkelbereichs liegt, und
- Erkennen der Fahrspur auf Basis der übrigen Kanten aus der Menge der erkannten Kanten.

Die Vorrichtung kann ferner gemäß einer Ausführungsform der Erfindung ausgebildet sein, ein Verfahren gemäß der Erfindung und wie oben erläutert auszuführen.

Weiterhin betrifft die Erfindung gemäß einer Ausführungsform ein automatisches Fahrspurwechselwarnsystem oder Fahrspurhaltesystem, das eine Vorrichtung nach der Erfindung und wie vorstehend beschrieben aufweist.

Schließlich betrifft die Erfindung gemäß einer Ausführungsform ein Fahrzeug mit einem automatischen Fahrspurwechselwarnsystem oder Fahrspurhaltesystem nach der Erfindung und wie vorstehend beschrieben.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
- Fig. 1: ein Flussdiagramm eines Verfahren zur Fahrspurerkennung gemäß der Erfindung;
- Fig. 2: eine Skizze zur Verdeutlichung der Wirkung von Scheinwerferreflexionen auf eine Fahrspurerkennung;
- Fig. 3: ein Beispiel eines digitalisierten Bildes eines Bereichs vor einem Fahrzeug, das mit einer Kamera eines Fahrspurhalteassistenzsystems erfasst wurde, und die für eine Fahrspurerkennung gemäß der Erfindung relevanten Elemente im Bildes; und
- Fig. 4: ein einfaches Blockschaltbild eines Ausführungsbeispiels einer Vorrichtung gemäß der Erfindung.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

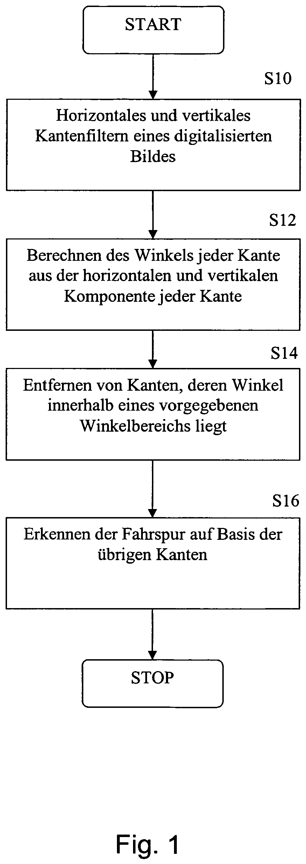

Das in Fig. 1 anhand eines Flussdiagramms skizzierte Verfahren zur Fahrspurerkennung ist insbesondere als Algorithmus implementiert, der in eine embedded Software integriert ist, die in einem Spurhalteassistenzsystem implementiert ist. Der Fahrspurerkennungsalgorithmus wertet von beispielsweise einem CCD (Charged Coupled Device)- oder CMOS (Complementary Metal Oxide Semiconductor)-Bildsensor erfasste und digitalisierte Bilder aus, die eine Situation vor einem Fahrzeug zeigen, in dem der Bildsensor in einer Kamera eines Spurhalteassistenzsystems eingebaut ist. Eine erkannte Fahrspur bzw. deren Verlauf kann dann beispielsweise zur Warnung vor einem unbeabsichtigten Spurwechsel oder einem aktiven Lenkeingriff verwendet werden.

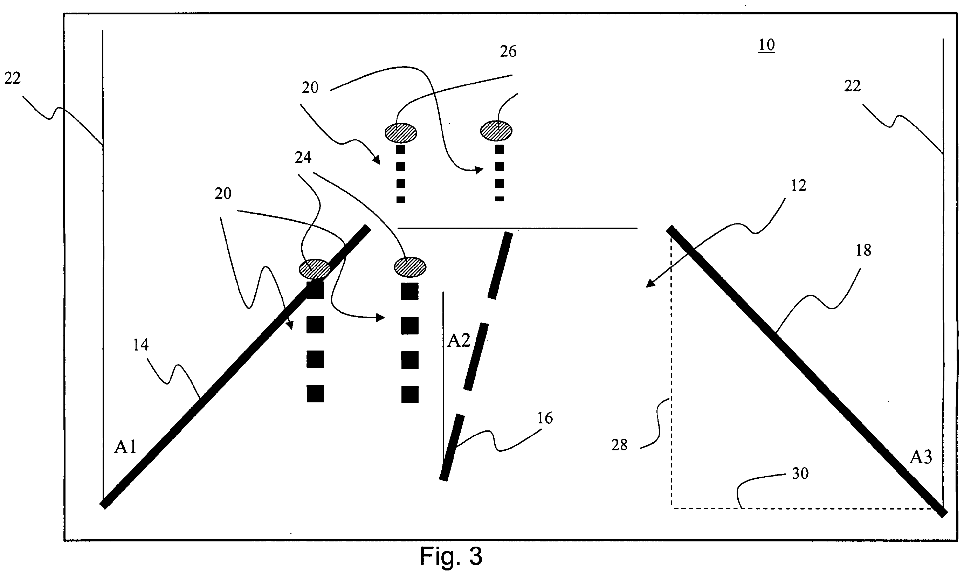

Im in Fig. 1 gezeigten Flussdiagramm wird im Schritt S10 beispielsweise mittels eines Sobelfilters ein horizontales und vertikales Kantenfiltern eines digitalisierten Bildes durchgeführt. Hierzu wird zunächst das horizontale und anschließend das vertikale Kantenfiltern eines Bildbereichs, der auch das gesamte Bild umfassen kann, durchgeführt. Als Ergebnis der Filterung werden zusammengehörige Paare von horizontalen und vertikalen Komponenten von Kanten im gefilterten Bildbereich erhalten. Aus diesen Komponenten wird im Schritt S12 für jede Kante deren Winkel in Bezug auf eine Referenzkante berechnet, wie es später anhand von Fig. 3 noch genauer beschrieben wird. In einem darauffolgenden Schritt S14 werden dann die Kanten aus der Menge der erkannten Kanten entfernt, deren Winkel innerhalb eines vorgegebenen Winkelbereichs liegen. Mit anderen Worten werden also Kanten mit einer bestimmten Orientierung, insbesondere einer nahezu vertikalen Orientierung, im gefilterten Bildbereich aussortiert, da diese Kanten für die Fahrspurerkennung nicht verwendet werden sollen, da sie mit hoher Wahrscheinlichkeit von Reflexionen von Scheinwerfern entgegenkommender Fahrzeuge stammen. Im nächsten Schritt S16 wird dann die Fahrspur auf Basis der übrigen Kanten erkannt, die mit hoher Wahrscheinlich aus Fahrbahn- und Fahrspurmarkierungen resultieren.

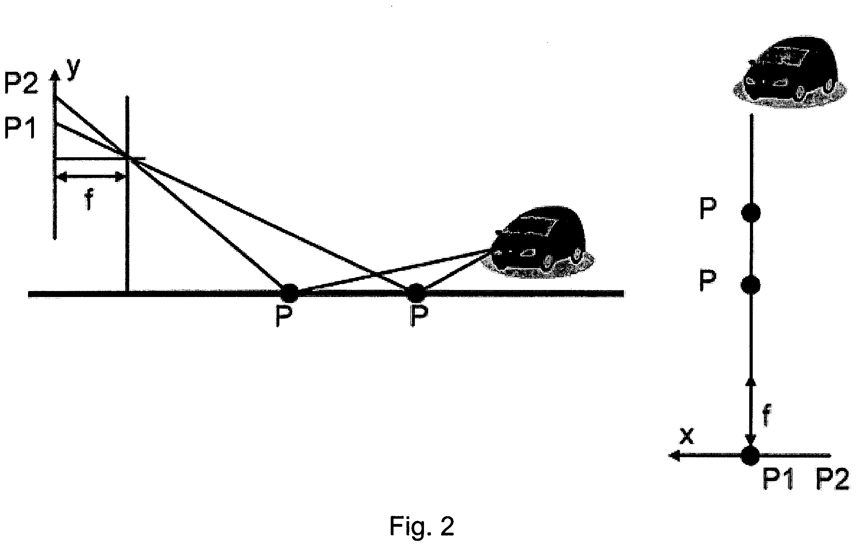

In Fig. 2 ist nun gezeigt, welche Art von Kanten durch das in Fig. 1 skizzierte Verfahren insbesondere aussortiert werden sollen, und wie diese Kanten im digitalisierten Bild entstehen. Kanten, die nicht für eine Fahrspurerkennung gemäß der Erfindung verwendet werden sollen, stammen vor allem von Reflexionen von Scheinwerfern oder auch anderen Lichtquellen auf einer insbesondere nassen Fahrbahn. In Fig. 2 ist dargestellt, dass die Scheinwerfer eines Fahrzeugs derartige Reflexionen mit nahezu senkrechter Orientierung im bild erzeugen können. Die Scheinwerfer des Fahrzeugs erzeugen Lichtkegel insbesondere an der Position P auf einer Strasse. Diese Lichtkegel werden wiederum von der Strasse an die Punkte P1 bzw. P2 reflektiert. Die so erzeugten Reflexionen verlaufen auf einer nahezu senkrechten Linie, wie in der rechten Abbildung in Fig. 2 gezeigt ist, die ggf. um einen Rollwinkel des Fahrzeugs gedreht ist. In einem digitalisierten Bild- bzw. einer Bildfolge erscheinen diese Reflexionen daher als nahezu senkrechte Linien, die vor allem bei Dämmerung oder in Dunkelheit mit hohem Kontrast im Bild erscheinen und daher sehr charakteristische Hell-Dunkel/Dunkel-Hell-Übergänge erzeugen, welche von einem herkömmlichen Spurhalteassistenzsystem irrtümlich als Fahrspur- oder Fahrbahnmarkierungen interpretiert werden können.

Fig. 3 zeigt nun ein digitalisiertes Bild 10 einer Situation vor einem Fahrzeug, wie es beispielsweise von einem CCD- oder CMOS-Bildsensor eines Spurhalteassistenzsystems erfasst wird. Anhand dieses Bildes wird nun im Detail erläutert, wie mit dem erfindungsgemäßen Verfahren eine automatische Fahrspurerkennung arbeitet. Das digitalisierte Bild 10 gibt eine Szenerie bei Nacht wieder und enthält mehrere Markierungen 14, 16, 18, 20, 24 und 26 in Form. Die Markierungen 14 und 18 sind Strassenbegrenzungsmarkierungen. Die Markierung 16 ist eine Mittelstreifenmarkierung der Fahrbahn und grenzt die eigene Fahrspur 12 des Fahrzeugs mit dem Spurhalteassistenzsystems von der Gegenspur ab, auf der zwei Fahrzeuge entgegenkommen. Von den beiden Fahrzeugen sind die Scheinwerfer 24 des ersten Fahrzeugs und die Scheinwerfer 26 des dem ersten nachfolgenden zweiten Fahrzeugs zu erkennen. Da die Fahrbahn nass ist, erzeugen die Lichter der Scheinwerfer 24 und 26 jeweils etwa vertikale Markierungen 20 im Bild 10. Für das Spurhalteassistenzsystem erscheinen die Markierungen 20 aufgrund des annährend gleichen Kontrastes wie die Markierungen 14, 16 und 18 wie normale Straßenmarkierungen, wenn nicht das erfindungsgemäße Verfahren zur Klassifizierung der Markierungen im Bild 10 eingesetzt wird.

Jede der länglichen Markierungen 14, 16, 18 und 20 wird nun genau auf Ihre Orientierung im Bild 10 untersucht. Hierzu wird zunächst eine horizontale Kantenfilterung des Bildes 10 und anschließend eine vertikale Kantenfilterung des Bildes 10 jeweils mit einem Sobelfilter durchgeführt. Bei den Kantenfilterungen werden aus den digitalen Bilddaten Hell-Dunkel/Dunkel-Hell-Übergänge gefiltert. Die horizontale Kantenfilterung ergibt hierbei eine Menge von horizontalen Komponenten der durch die Markierungen erzeugten Kanten 14, 16, 18 und 20 im Bild 10, und die vertikale Kantenfilterung ergibt eine Menge von vertikalen Kantenkomponenten. Diese Komponenten werden paarweise sortiert, so dass sich für jede Markierung 14, 16, 18 und 20 jeweils ein Komponentenpaar ergibt. Für die rechte Strassenbegrenzungsmarkierung 18 sind die horizontale Kantenkomponente 30 und die vertikale Kantenkomponente 28 dargestellt.

Zur Bestimmung der Orientierung der Kanten 14, 16, 18 und 20 werden nun deren Winkel in Bezug auf eine vertikale Referenzkante 22 bestimmt. Die Winkel werden durch Berechnung des Arcustanges des Quotienten der horizontalen und vertikalen Kantenkomponente jedes Kantenpaares ermittelt. Für die Kanten 14, 16 und 18 ergeben sich die Winkel A1, A2 und A3, während sch für die Kanten 20 Winkel von etwa 0° ergibt. Gegebenenfalls werden die berechneten Winkel noch um den Rollwinkel des Fahrzeugs mit dem Spurhalteassistenzsystems korrigiert. Der Rollwinkel kann beispielsweise von einem Sensor gemessen und dem Spurhalteassistenzsystem zur weiteren Verarbeitung zugeführt werden. Für die Entfernung von für die zuverlässige und exakte Spurerkennung ungeeignete Kanten 20, die durch die Reflexionen der Scheinwerfer 24 und 26 auf der nassen Fahrbahn erzeugt werden, ist ein Winkelbereich von etwa ±Δ vorgegeben. Δ ist hierbei derart gewählt, dass nahezu vertikale Kanten im Bild 10 zuverlässig aussortiert werden können, beispielsweise 5°. Für jeden berechneten Winkel wird nun überprüft, ob der Winkel im vorgegebenen Winkelbereich liegt. Die Winkel A1, A2 und A3 liegen außerhalb des Winkelbereichs, während die Winkel der Kanten 20 innerhalb des vorgegebenen Winkelbereichs liegen. Die Kanten 20, deren Winkel im vorgegebenen Winkelbereich liegen, werden daraufhin aus der Menge der erkannten Kanten im Bild 10 entfernt. Die Spurerkennung verwendet daher nur die Kanten 14, 16 und 18 für die Spurerkennung, was zu genaueren und zuverlässigen Ergebnissen als bei einer Spurerkennung führt, die alle Kanten 14, 16, 18 und 20 auswertet.

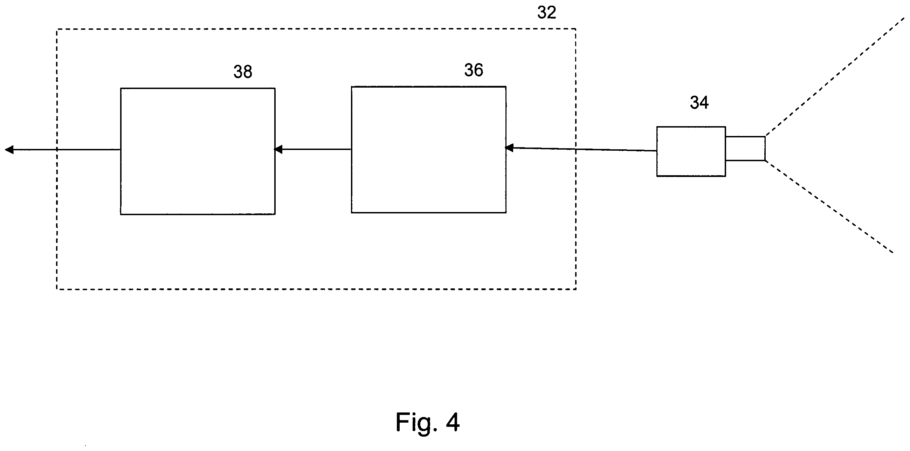

Fig. 4 zeigt eine Fahrspurerkennungsvorrichtung 32 zur Verarbeitung der von einer Fahrzeug-Kamera 34 erfassten digitalisierten Bilder. Die Vorrichtung 32 umfasst Kantenfilterungsmittel 36, die beispielsweise durch ein FPGA (Field Programable Gate Array) implementiert sein können. Die durch die Kantenfilterung ermittelten Kanten werden Kantenauswertungsmittel 38 zugeführt werden. Die Kantenauswertungsmittel 38 können beispielsweise durch einen leistungsfähigen Mikroprozessor implementiert sein, der durch ein spezielles Programm derart konfiguriert ist, dass er das erfindungsgemäße Verfahren, wie es beispielsweise in Fig. 1 anhand eines Flussdiagramms dargestellt ist, implementieren kann. Der entsprechend konfigurierte Mikroprozessor entfernt daher zunächst aus den empfangen Kanten diejenigen, die für die Fahrspurerkennung ungeeignet sind, wie es beispielsweise oben in Zusammenhang mit dem in Fig. 3 gezeigten Bild 10 erläutert ist. Stehen die Bilddaten bei der Auswertung nicht mehr zur Verfügung, da sie beispielsweise mit einem externen FPGA berechnet wurden, kann die Prozessor die durch die horizontale und vertikale Kantenfilterung erzeugten Kantenpaare auch daraufhin überprüfen, ob sie übereinander angeordnet sind. Ist dies der Fall und unterscheiden sich die Orientierungen einer Prädiktion der Fahrspur und der untereinander liegenden Messungen (die Orientierung von übereinander liegenden Messungen lässt sich beispielsweise durch eine Regression bestimmen) um eine Schwelle, so können diese verworfen werden. Anschließend führt der Prozessor mit den übrigen Kanten eine Fahrspurerkennung durch und gibt entsprechende Daten zur erkannten Fahrspur zur weiteren Verarbeitung durch beispielsweise ein Spurhalteassistenzsystem aus.

### Bezugszeichen

- 10: digitalisiertes Bild eines Szenerie vor einem Fahrzeug
- 12: Fahrspur des die Fahrspurerkennung einsetzenden Fahrzeugs
- 14: linke Strassenbegrenzungsmarkierung
- 16: Mittelstreifenmarkierung
- 18: rechte Strassenbegrenzungsmarkierung
- 20: durch die Reflexionen der Scheinwerfer entgegenkommender Fahrzeuge erzeugte Markierungen
- 22: Referenzkante
- 24: erstes entgegenkommendes Fahrzeug
- 26: zweites entgegenkommendes Fahrzeug
- 28: vertikale Kantenkomponente der rechten Strassenbegrenzungsmarkierung
- 30: horizontale Kantenkomponente der rechten Strassenbegrenzungsmarkierung
- 32: Fahrspurerkennungsvorrichtung
- 34: Kamera
- 36: Kantenfilterungsmittel
- 38: Kantenauswertungsmittel
- S10-S16: Verfahrensschritte

## Patentansprüche

1. Verfahren zur Fahrspurerkennung, bei dem ein digitalisiertes Bild (10) einer Fahrspur (12) ausgewertet wird, mit den folgenden Schritten:
- Erkennen von Kanten (14, 16, 18, 20) in dem Bild (S10),
- Ermitteln der Winkel der erkannten Kanten in Bezug auf eine Referenzkante (22; S12),
- Entfernen der Kanten (16, 20) aus der Menge der erkannten Kanten (S14), deren Winkel innerhalb eines vorgegebenen Winkelbereichs liegt, und
- Erkennen der Fahrspur (12) auf Basis der übrigen Kanten (14, 18) aus der Menge der erkannten Kanten (S16),
**dadurch gekennzeichnet, dass**
das Entfernen von Kanten nur dann erfolgt, wenn sich das die Fahrspurerkennung einsetzende Fahrzeug innerhalb der Fahrspur befindet.

2. Verfahren nach Anspruch 1,
**dadurch gekennzeichnet, dass**
die Referenzkante eine senkrechte Kante (22) im Bild ist, die um einen vorgegebenen Rollwinkel eines Fahrzeugs gedreht ist.

3. Verfahren nach Anspruch 1 oder 2,
**dadurch gekennzeichnet, dass**
der vorgegebene Winkelbereich derart konfiguriert ist, dass er alle Kanten (20) umfasst, deren Orientierung etwa der Orientierung der Referenzkante (22) entspricht dass auch Kanten (20) als zu entfernende Kanten klassifiziert werden, deren Orientierung im Bild nicht genau mit der Orientierung der Referenzkante (22) übereinstimmt, sondern in Bezug auf die Orientierung der Referenzkante verkippt ist, aber nicht derart verkippt, dass sie beispielsweise die Randmarkierungen oder Leitplanken der Fahrspur sein könnten.

4. Verfahren nach Anspruch 1, 2 oder 3,
**dadurch gekennzeichnet, dass**
das Erkennen von Kanten ein horizontales und anschließend ein vertikales Kantenfiltern eines Bereichs des Bildes aufweist, um Paare von jeweils zu einer Kante gehörigen horizontalen und vertikalen Kantenkomponenten (28, 30) zu bestimmen, und
das Ermitteln der Winkel (A1, A2) der erkannten Kanten (14, 18) das Berechnen des Arcustangens des Quotienten der horizontalen und vertikalen Kantenkomponente (28, 30) jedes Kantenpaares im Bereich des Bildes aufweist.

5. Verfahren nach einem der vorhergehenden Ansprüche,
**dadurch gekennzeichnet, dass**
in einem Trackingmodus der Fahrspurerkennung das Entfernen einer Kante nur dann erfolgt, wenn die Differenz zwischen dem Winkel der Kante, deren Winkel innerhalb des vorgegebenen Winkelbereichs liegt, und dem Winkel einer prädizierten Kante der Fahrspur eine vorgegebene Schwelle überschreitet.

6. Verfahren nach Anspruch 5,
**dadurch gekennzeichnet, dass**
bei einem histogrammbasierten Trackingmodus die Bereiche von der Kantenentfernung ausmaskiert werden, in denen sich Kanten befinden, bei denen die Differenz zwischen dem Winkel der Kante, deren Winkel innerhalb des vorgegebenen Winkelbereichs liegt, und dem Winkel der prädizierten Kante der Fahrspur die vorgegebene Schwelle überschreitet.

7. Vorrichtung (32) zur Fahrspurerkennung aufweisend Kantenfilterungsmittel (36) und Kantenauswertungsmittel (38), wobei die Vorrichtung (32) die zur Auswertung eines digitalisierten Bildes einer Fahrspur derart konfiguriert ist, dass sie die folgenden Schritte ausführt:
- Erkennen von Kanten in dem Bild mittels der Kantenfilterungsmittel (36), und
mittels der Kantenauswertungsmittel (38)
- Ermitteln der Winkel der erkannten Kanten in Bezug auf eine Referenzkante,
- Entfernen der Kanten aus der Menge der erkannten Kanten, deren Winkel innerhalb eines vorgegebenen Winkelbereichs liegt, und
- Erkennen der Fahrspur auf Basis der übrigen Kanten aus der Menge der erkannten Kanten,
**dadurch gekennzeichnet, dass**
das Entfernen von Kanten nur dann erfolgt, wenn sich das die Vorrichtung aufweisende Fahrzeug innerhalb der Fahrspur befindet.

8. Vorrichtung nach Anspruch 7,
**dadurch gekennzeichnet, dass**
sie zur Durchführung eines Verfahrens nach einem der Ansprüche 1 bis 6 konfiguriert ist.

9. Automatisches Fahrspurerkennungssystem, das eine Vorrichtung nach Anspruch 7 oder 8 aufweist und Fahrspurdaten ausgibt.

10. Fahrspurwechselwarnsystem oder Fahrspurhaltesystem, das ein automatisches Fahrspurerkennungssystem nach Anspruch 9 aufweist und die von diesem ausgegebenen Fahrspurdaten zum Erkennen eines Fahrspurwechsels verarbeitet.

11. Fahrzeug mit einem automatischen Fahrspurwechselwarnsystem oder Fahrspurhaltesystem nach Anspruch 10.

## Claims

1. A lane detection method, in which a digitised image (10) of a lane (12) is evaluated, comprising the following steps:
- detecting edges (14, 16, 18, 20) in the image (S10),
- determining the angles of the detected edges with respect to a reference edge (22; S12),
- removing the edges (16, 20) from the plurality of detected edges (S14), the angles of which lie within a predefined angle range, and
- detecting the lane (12) based on the remaining edges (14, 18) from the plurality of detected edges (S16),
**characterized in that**
edges are only removed if the vehicle using the lane detection is located within the lane.

2. The method according to Claim 1,
**characterized in that**
the reference edge is a perpendicular edge (22) in the image, which is rotated about a predefined roll angle of a vehicle.

3. The method according to Claim 1 or 2,
**characterized in that**
the predefined angle range is configured in such a manner that it comprises all of the edges (20), the orientation of which approximately corresponds to the orientation of the reference edge (22), edges (20) are also classified as edges which are to be removed, the orientation of which in the image does not precisely correspond to the orientation of the reference edge (22) but rather is tilted with respect to the orientation of the reference edge but not tilted in such a manner that they could be, for example, the edge markings or crash barriers of the lane.

4. The method according to Claim 1, 2 or 3,
**characterized in that**
the detecting of edges includes horizontal and, subsequently, vertical edge filtering of a region of the image, in order to establish pairs of horizontal and vertical edge components (28, 30) which each belong to one edge, and
the determining of the angles (A1, A2) of the detected edges (14, 18) includes the calculating of the arc tangent of the quotient of the horizontal and vertical edge component (28, 30) of each pair of edges in the region of the image.

5. The method according to any one of the preceding claims,
**characterized in that**
in a tracking mode of the lane detection an edge is only removed if the difference between the angle of the edge, the angle of which lies within the predefined angle range, and the angle of a predicted edge of the lane exceeds a predefined threshold.

6. The method according to Claim 5,
**characterized in that**
during a histogram-based tracking mode, the regions of the edge removal are masked out in which edges are located for which the difference between the angle of the edge, the angle of which lies within the predefined angle range, and the angle of the predicted edge of the lane exceeds the predefined threshold.

7. A lane detection device (32), having edge filtering means (36) and edge evaluating means (38), wherein the device (32) is configured to evaluate a digitised image of a lane in such a manner that it executes the following steps:
- detecting edges in the image by means of the edge filtering means (36), and by means of the edge evaluating means (38),
- determining the angles of the detected edges with respect to a reference edge,
- removing the edges from the plurality of detected edges, the angles of which lie within a predefined angle range, and
- detecting the lane based on the remaining edges from the plurality of detected edges,
**characterized in that**
the edges are only removed if the vehicle having the device is located within the lane.

8. The device according to Claim 7,
**characterized in that**
it is configured to carry out a method according to any one of Claims 1 to 6.

9. An automatic lane detection system which has a device according to Claim 7 or 8 and outputs lane data.

10. A lane change warning system or lane departure warning system which has an automatic lane detection system according to Claim 9 and which processes lane data output by said lane detection system in order to detect a lane change.

11. A vehicle having an automatic lane change warning system or lane departure warning system according to Claim 10.

## Revendications

1. Procédé de détection d'une voie de circulation par lequel une image numérisée (10) d'une voie de circulation (12) est évaluée, à l'aide des étapes suivantes :
- détection de lignes (14, 16, 18, 20) dans l'image (S10),
- détermination des angles des lignes détectées par rapport à une ligne de référence (22 ; S12),
- suppression, de l'ensemble des lignes détectées (S14), des lignes (16, 20) dont l'angle se trouve dans une plage angulaire spécifiée, et
- détection de la voie de circulation (12) sur la base des lignes restantes (14, 18) dans l'ensemble des lignes détectées (S16),
**caractérisé en ce que**
la suppression des lignes n'est effectuée que lorsque le véhicule utilisant la détection de voie de circulation se trouve dans la voie de circulation.

2. Procédé selon la revendication 1,
**caractérisé en ce que**
la ligne de référence est une ligne verticale (22) dans l'image, laquelle est pivotée d'un angle de roulis d'un véhicule spécifié.

3. Procédé selon la revendication 1 ou 2,
**caractérisé en ce que**
la plage angulaire spécifiée est configurée de telle sorte qu'elle comprend toutes les lignes (20) dont l'orientation correspond approximativement à l'orientation de la ligne de référence (22), que des lignes (20) sont également classées comme lignes devant être supprimées lorsque leur orientation ne correspond pas exactement à l'orientation de la ligne de référence (22) mais est inclinée par rapport à l'orientation de la ligne de référence, toutefois non inclinée de telle sorte qu'elles pourraient être par exemple les marques de bord ou les glissières de sécurité de la voie de circulation.

4. Procédé selon la revendication 1, 2 ou 3,
**caractérisé en ce que**
la détection de lignes comprend un filtrage de lignes horizontal et ensuite un filtrage de lignes vertical d'une zone de l'image, afin d'identifier des paires de composantes de lignes (28, 30) horizontales et verticales appartenant respectivement à une ligne, et
la détection des angles (A1, A2) des lignes détectées (14, 18) comprenant le calcul de l'arc tangente du quotient des composantes de lignes horizontales et verticales (28, 30) de chaque paire de lignes dans la zone de l'image.

5. Procédé selon l'une quelconque des revendications précédentes,
**caractérisé en ce que**
la suppression d'une ligne n'est effectuée que lorsque la différence entre l'angle de la ligne dont l'angle se trouve dans la plage angulaire spécifiée et l'angle d'une ligne prédite de la voie de circulation dépasse un seuil spécifié, dans un mode de suivi de la détection de voie de circulation.

6. Procédé selon la revendication 5,
**caractérisé en ce que**,
dans un mode de suivi basé sur un histogramme, les plages dans lesquelles se trouvent des lignes pour lesquelles la différence entre l'angle de la ligne dont l'angle se trouve dans la plage angulaire spécifiée et l'angle de la ligne prédite de la voie de circulation dépasse le seuil spécifié sont masquées par la suppression de lignes.

7. Dispositif (32) de détection d'une voie de circulation présentant des moyens de filtrage de lignes (36) et des moyens d'évaluation de lignes (38), le dispositif (32) étant configuré pour l'évaluation d'une image numérisée d'une voie de circulation de telle sorte qu'il exécute les étapes suivantes :
- détection de lignes dans l'image à l'aide de moyens de filtrage de lignes (36) et
- à l'aide de moyens d'évaluation de lignes (38),
- détermination des angles des lignes détectées par rapport à une ligne de référence,
- suppression, de l'ensemble des lignes détectées, des lignes dont l'angle se trouve dans une plage angulaire spécifiée, et
- détection de la voie de circulation sur la base des lignes restantes dans l'ensemble des lignes détectées,
**caractérisé en ce que**
la suppression des lignes ne peut être effectuée que lorsque le véhicule utilisant le dispositif se trouve dans la voie de circulation.

8. Dispositif selon la revendication 7,
**caractérisé en ce que**
celui-ci est configuré pour l'exécution d'un procédé selon l'une des revendications 1 à 6.

9. Système de détection d'une voie de circulation automatique qui présente un dispositif selon la revendication 7 ou 8 et sort des données de voie de circulation.

10. Système d'avertissement de changement de voie de circulation ou système de maintien de voie de circulation qui présente un système de détection d'une voie de circulation automatique selon la revendication 9 et qui traite les données de voie de circulation sorties par celui-ci pour la détection d'un changement de voie de circulation.

11. Véhicule avec un système d'avertissement de changement de voie de circulation ou un système de maintien de voie automatiques selon la revendication 10.
